# EUROPEAN PATENT APPLICATION

(11) **EP 2 639 734 A1**
(43) Date of publication of application: **18.09.2013**
(21) Application number: 13159203.2
(22) Date of filing: 14.03.2013
(51) Int. Cl.: G06F 21/41, G06F 21/60

(54) **Image processing system including image processing apparatus for transmitting image data**

(30) Priority: 15.03.2012 JP 2012058653
(71) Applicant: CANON KABUSHIKI KAISHA, Ohta-ku Tokyo 146-8501 (JP)
(72) Inventor: Kawashima, Yasuaki, Ohta-ku, Tokyo (JP)
(74) Representative: Reinders, Christian

(57) **Abstract**

An MFP receives an input of authentication information from a user (in step S1001). An authentication server authenticates the user based on the authentication information received by the MFP (in step S1002). When designating a destination for transmitting image data as a file, if it is determined that a transmission protocol corresponding to the designated destination is a first transmission protocol (SMB or WebDAV), the MFP presents the authentication information received in step S1001 (in steps S1108 and S1208). Further, if it is determined that the transmission protocol corresponding to the designated destination is a second transmission protocol (FTP), the MFP does not present the authentication information (in steps S1107 and S1207).

## Description

### BACKGROUND OF THE INVENTION

### Field of the Invention

The present invention relates to an image processing system including an image processing apparatus that transmit image data.

### Description of the Related Art

It is known that image data as a file is conventionally transmitted from an image processing apparatus such as a multi function peripheral (MFP). As a transmission protocol for transmitting a file, it is known that image data is transmitted with, e.g., a server message block (SMB) (refer to Japanese Patent Application Laid-Open No. 2011-234126). As another example, it is also known that image data is transmitted with a distributed authoring and versioning (DAV) protocol for world wide web (WWW), i.e., WebDAV. Further, as another example, it is known that the image data is transmitted with a file transfer protocol (FTP).

In the case of transmitting the file, authentication information (user name and password) are required in order to access an apparatus at the destination in addition to information (host name) indicating an apparatus that manages a folder serving as a storage destination of the image data, and positional information (path) of the folder.

If the apparatus to which the image data is transmitted as a file is in the same domain as an image processing apparatus on the transmission source, the authentication information of a user is in many cases managed in an unified fashion. In this case, the authentication information used for log-in to the image processing apparatus and the authentication information required to access the apparatus to which the file is transmitted, may be common information.

If the authentication information is common, the authentication information input by a user to log-in to an image processing apparatus can be taken over (commonly used) as the authentication information for transmitting the image data as a file. Thus, it is possible to suppress troublesome work for a user who individually inputs the authentication information.

However, depending on a transmission protocol used for file transmission, the apparatus at the destination may not be in the same domain as the image processing apparatus on the transmission source (that is, can be in another domain). For example, the SMB and WebDAV are transmission protocols that take account of the domain, so that they are used for transmitting the file to the destination in the same domain. Therefore, the apparatus at the destination is limited to that placed in the same domain as the image processing apparatus on the transmission source. Since the FTP is a transmission protocol that does not take account of the domain, the image data can be transmitted as a file to an apparatus in another domain.

When transmitting the image data as the file to the apparatus in another domain, even if the authentication information is "taken over", the authentication information is not common. Therefore, there is a high possibility that the authentication fails when the file is transmitted. In addition, since the authentication information used for log-in to the image processing apparatus is transmitted to an apparatus that is designated as the file transmission destination, there is a danger of leakage of the authentication information.

### SUMMARY OF THE INVENTION

The present invention is directed to provide a system that can switch to take over authentication information or not to take over depending on a transmission protocol when transmitting a file.

The present invention in its first aspect provides an image processing system as specified in claims 1 to 9.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

Fig. 1 illustrates the entire image processing system according to a first exemplary embodiment of the present invention.

Fig. 2 illustrates a block diagram of a configuration of a multi function peripheral (MFP) according to the first exemplary embodiment.

Fig. 3 illustrates a block diagram of configurations of an authentication server and a file server according to the first exemplary embodiment.

Fig. 4 illustrates a diagram of an operation screen of the MFP according to the first exemplary embodiment.

Fig. 5 illustrates another diagram of the operation screen of the MFP according to the first exemplary embodiment.

Fig. 6 illustrates another diagram of the operation screen of the MFP according to the first exemplary embodiment.

Fig. 7 illustrates another diagram of the operation screen of the MFP according to the first exemplary embodiment.

Fig. 8 illustrates another diagram of the operation screen of the MFP according to the first exemplary embodiment.

Fig. 9 illustrates another diagram of the operation screen of the MFP according to the first exemplary embodiment.

Fig. 10 illustrates a flowchart of a log-in operation of the MFP according to the first exemplary embodiment.

Fig. 11 illustrates a flowchart of an operation for inputting a new destination in the MFP according to the first exemplary embodiment.

Fig. 12 illustrates a flowchart of an operation for transmitting a file of the MFP according to the first exemplary embodiment.

Fig. 13 illustrates another diagram of the operation screen of the MFP according to the first exemplary embodiment.

Fig. 14 illustrates another diagram of the operation screen of the MFP according to the first exemplary embodiment.

Fig. 15 illustrates a flowchart of an operation for transmitting a file of an MFP according to a second exemplary embodiment of the present exemplary embodiment.

### DESCRIPTION OF THE EMBODIMENTS

Various exemplary embodiments, features, and aspects of the invention will be described in detail below with reference to the drawings.

The exemplary embodiments do not limit the present invention with claims, and all combinations of features according to the exemplary embodiments are not necessarily essential to solving means of the present invention.

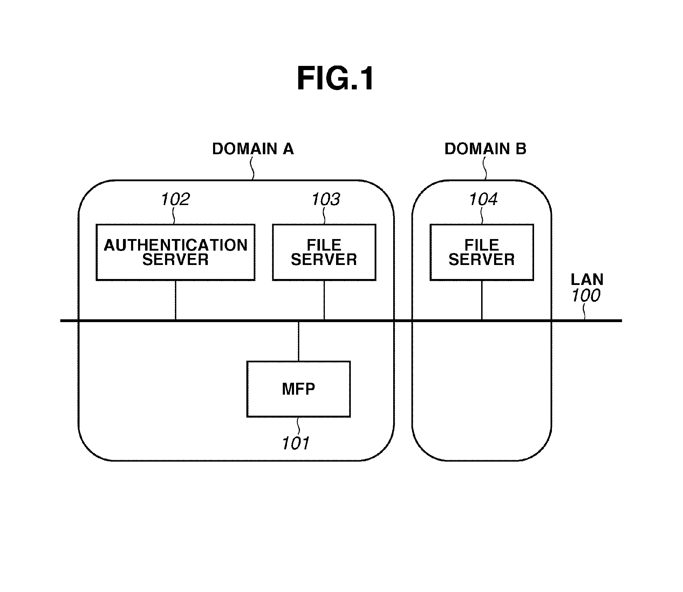

A first exemplary embodiment of the present invention is described. Fig. 1 illustrates a diagram of the entire image processing system. A multi function peripheral (MFP) 101, an authentication server 102, and file servers 103 and 104 are communicably connected to each other on a local area network (LAN) 100. The MFP 101 is an example of an image processing apparatus. The authentication server 102 is an example of an authentication device. The file server 103 and 104 are examples of a file management device.

The MFP 101 transmits a file to a folder serving as a destination in the file server 103 or 104. Alternatively, the MFP 101 can also transmit a file to a folder in a client personal computer (PC) (not illustrated). Further, the MFP 101 transmits image data via a mail server (not illustrated) by email.

The MFP 101, the authentication server 102, and the file server 103 belong to a domain A as illustrated in Fig. 1. The file server 104 belongs to a domain B. When transmitting a file from the MFP 101 with the SMB or WebDAV, the file can be transmitted to the file server 103 in the same domain. However, the file cannot be transmitted to the file server 104 in another domain.

When transmitting the file from the MFP 101 with the FTP, the file can be transmitted to both the file server 103 in the same domain and the file server 104 in another domain.

The image processing system includes the MFP 101, the authentication server 102, and the file server 103 and 104. Alternatively, the image processing system may include only the MFP 101 and the authentication server 102, or may include only the MFP 101.

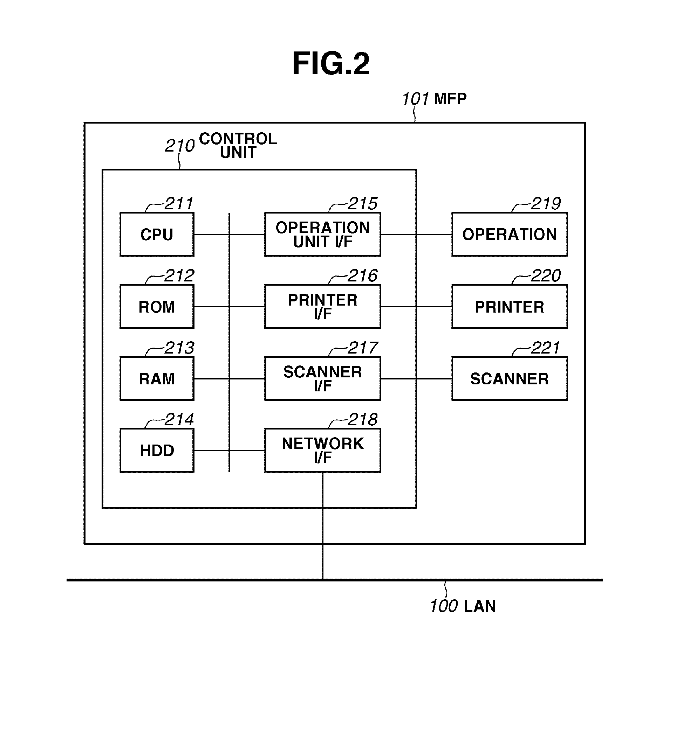

Fig. 2 illustrates a block diagram of a configuration of the MFP 101. A control unit 210 including a central processing unit (CPU) 211 controls the entire operation of the MFP 101. The CPU 211 reads a control program stored in a read only memory (ROM) 212 and performs various controls such as reading control or transmission control. A random access memory (RAM) 213 is used as a main memory of the CPU 211, or a temporary storage area such as a work area.

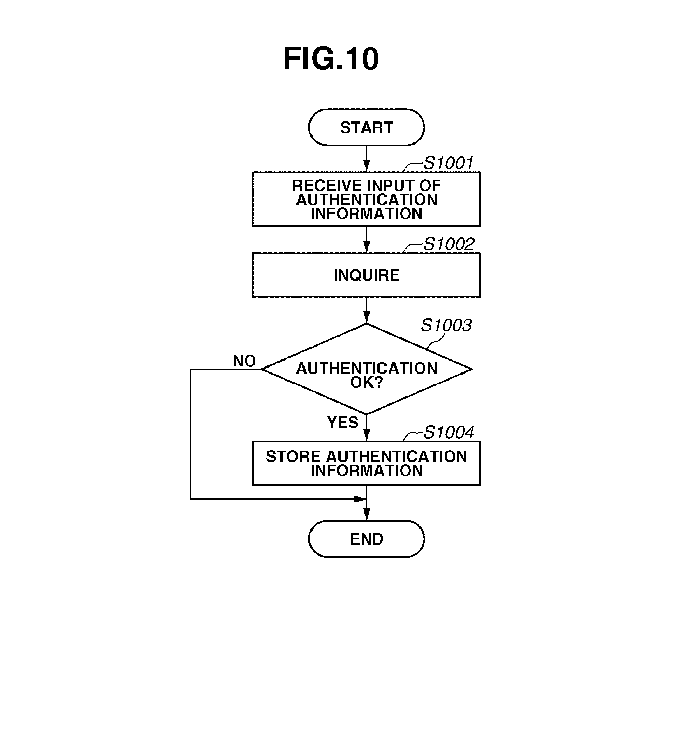

With the MFP 101, one CPU 211 executes processing in flowcharts in Figs. 10 to 12 and 15 with one memory (RAM 213 or HDD 214). Apparently, another form may be used. For example, the processing in the flowcharts in Figs. 10 to 12 and 15 can be executed by causing a plurality of CPUs or a plurality of RAMs or hard disk drives (HDDs) to cooperate with each other.

A hard disk drive (HDD) 214 stores image data or various programs. An operation unit interface (I/F) 215 connects an operation unit 219 to the control unit 210. The operation unit 219 includes a liquid crystal display unit having a touch panel function, or a keyboard, and receives an instruction from a user or inputs of various information as a reception unit.

A printer interface (I/F) 216 connects a printer 220 to the control unit 210. The image data to be printed by the printer 220 is transferred from the control unit 210 via the printer I/F 216, and is printed on a recording medium by a printer 220.

A scanner interface (I/F) 217 connects a scanner 221 to the control unit 210. The scanner 221 reads an image on a document, generates image data (image file), and inputs the generated data to the control unit 210 via the scanner I/F 217. The MFP 101 can transmit the image data (image file) generated by the scanner 221 as a file or can transmit the image data by email.

A network interface (I/F) 218 connects the control unit 210 (in the MFP 101) to the LAN 100. The network I/F 218 transmits the image data or the information to an external device (authentication server 102 or file server 103 or 104) on the LAN 100, or receives various information from the external device on the LAN 100.

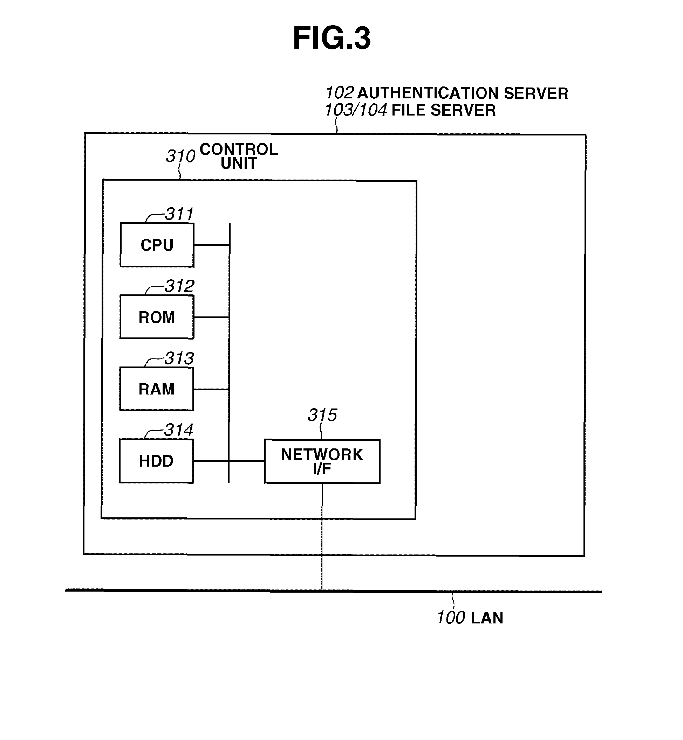

Fig. 3 illustrates a block diagram of a configuration of the authentication server 102. A control unit 310 including a central processing unit (CPU) 311 controls the entire operation of the authentication server 102. The CPU 311 reads a control program stored in a read only memory (ROM) 312 and executes various control processing. A random access memory (RAM) 313 is used as a main memory of the CPU 311, or a temporary storage area such as a work area. A hard disk drive (HDD) 314 stores the image data or various programs.

A network interface (I/F) 315 connects the control unit 310 (authentication server 102) to the LAN 100. The network I/F 315 transmits or receives information to/from another device on the LAN 100. Configurations of the file servers 103 and 104 are similar to that of the authentication server 102 (Fig. 3), and a description thereof is thus omitted.

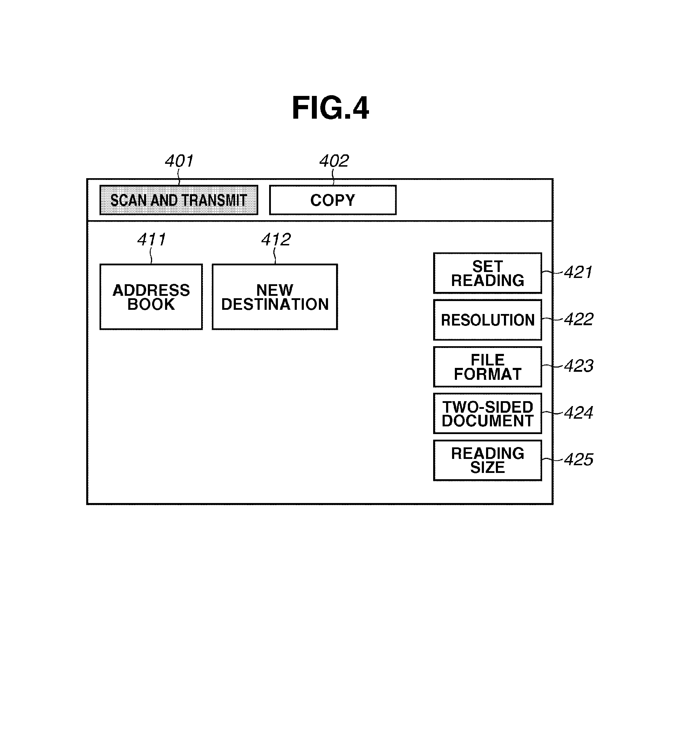

Fig. 4 illustrates an example of an operation screen displayed on the operation unit 219. On the operation screen in Fig. 4, a user manipulates an operation key 401 or 402, thereby selecting a function. Fig. 4 illustrates a state where the operation key 401 is selected. Referring to Fig. 4, "scan and transmit" and "copy" are illustrated as functions. However, the MFP 101 may have other functions.

The user who selects the operation key 401 manipulates an operation key 411 or 412, thereby setting the transmit destination of the image data. If the operation key 411 is operated, contents of an address book stored in the HDD 214 are displayed. The user designates the destination of the image data by referring to the contents registered in the address book.

When the operation key 412 is operated, a screen for receiving an input of new destination information from the user is displayed. The user inputs the destination information via the display screen, and designates the destination of the image data.

Although not illustrated, an operation key for displaying a list of one-touch keys may be provided. One or a plurality of destinations is assigned in advance to the one-touch key. The user operates a desired one-touch key, thereby designating contents corresponding to the one-touch key as the destination of the image data.

An operation key 421 is used for reading and setting of color/monochrome. An operation key 422 is used for setting a reading resolution. An operation key 423 is used for setting a file format of image data to be transmitted. An operation key 424 is used for setting one-sided/two-sided reading. The operation key 425 is used for setting a reading size.

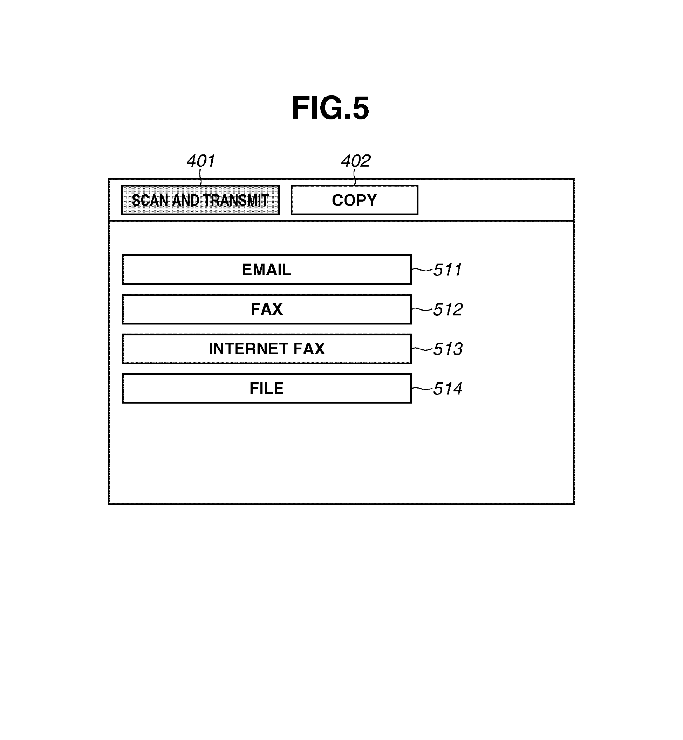

Fig. 5 illustrates another example of the operation screen displayed on the operation unit 219. The operation screen in Fig. 5 is displayed when the operation key 412 in Fig. 4 is operated. The user operates one of operation keys 511 to 514, thereby selecting a transmission method of the image data. If the image data is to be attached to email and transmitted, the user operates the operation key 511. When transmitting the image data by fax (G3-fax), the user operates an operation key 512.

When transmitting the image data via Internet fax, the user operates an operation key 513. Via the Internet fax, the image data in a fax format is attached to email and is transmitted. When transmitting the image data as a file, the user operates the operation key 514.

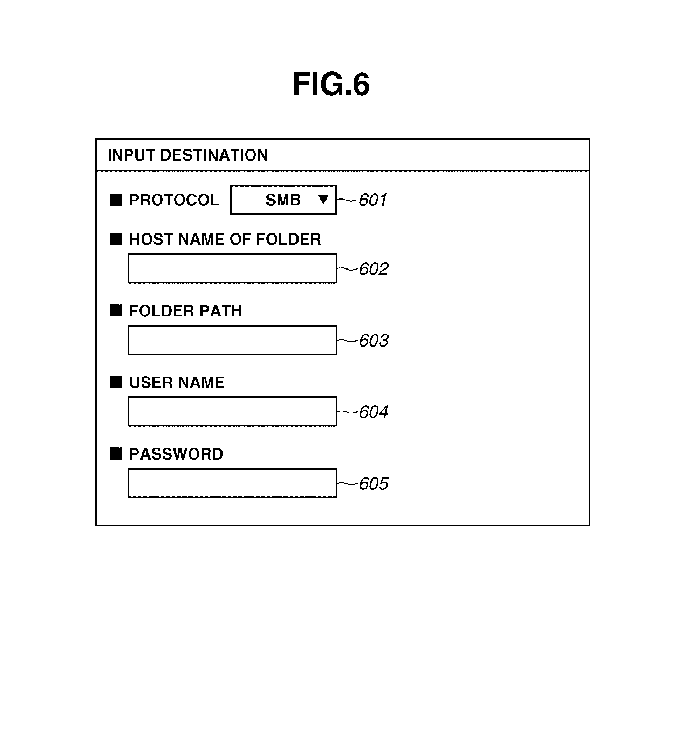

Fig. 6 illustrates another example of the operation screen displayed on the operation unit 219. The operation screen in Fig. 6 is displayed when the operation key 514 in Fig. 5 is operated. Information 601 indicates a transmission protocol used for transmitting the image data. The MFP 101 can select one of the SMB, WebDAV, and FTP. Alternatively, a transmission protocol other than the SMB, WebDAV, and FTP can be included as an option. The user can select a desired transmission protocol from an option displayed in a drop-down format.

Information 602 and 603 is a host name and a path for specifying a folder serving as the destination of the image data. Information 604 and 605 is authentication information (user name and password) required to access a folder specified by the information 602 and 603.

The user of the MFP 101 inputs new destination information for transmitting a file via the operation screen in Fig. 6, and designates the information as the destination of the image data. In order to omit the troublesome operation for inputting the new destination information at each transmission, information similar to that input in Fig. 6 can be registered in advance in the address book.

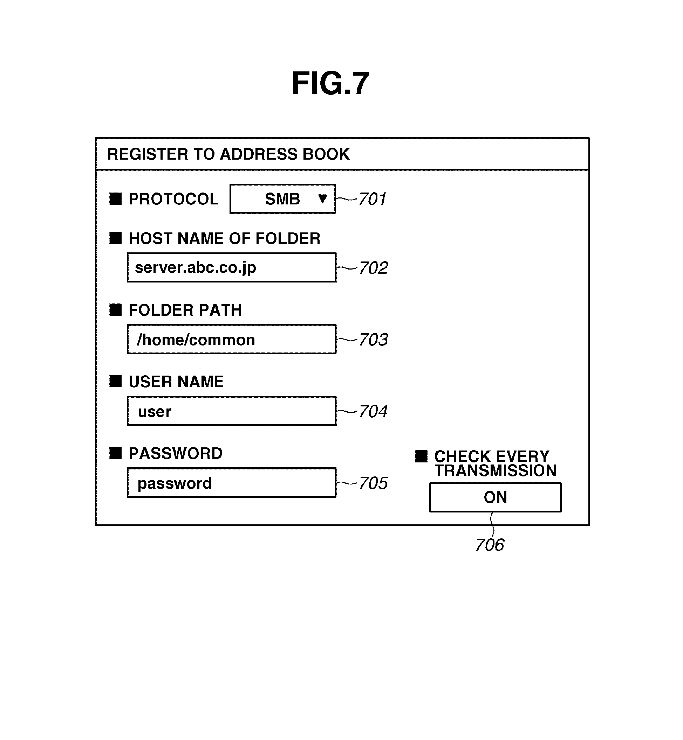

Fig. 7 illustrates another example of the operation screen displayed on the operation unit 219. The operation screen in Fig. 7 is displayed to register the destination information for transmitting the file in the address book. Information 701 to 705 is similar to the information 601 to 605 as above described. The operation screen in Fig. 7 includes an input field of information 706.

The information 706 indicates whether a user checks the authentication information of the information 704 and 705 at each transmission. If the information 706 is set to "ON", when actually transmitting the image data, even if the authentication information is registered as the information 704 and 705, the user is required to check the authentication information.

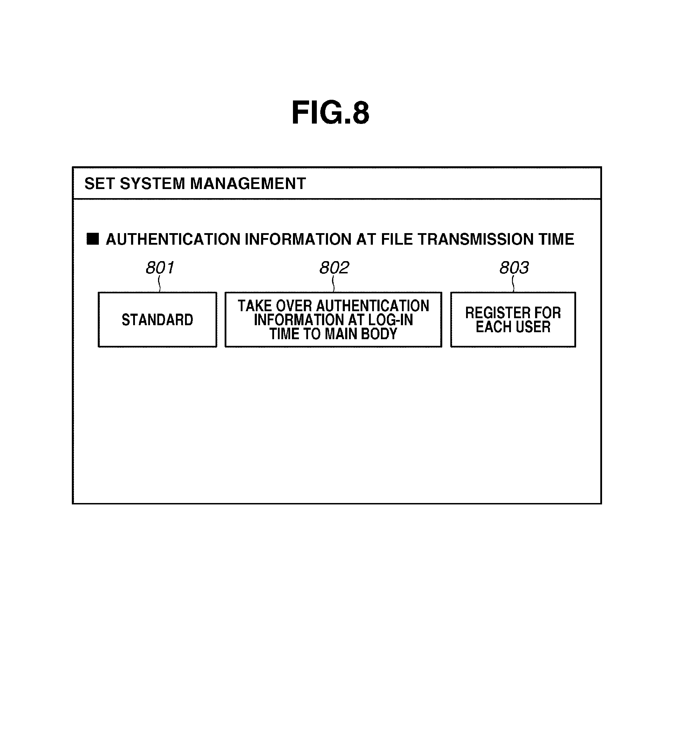

Fig. 8 illustrates another example of the operation screen displayed on the operation unit 219. The operation screen in Fig. 8 can be operated only by an administrator, and is not displayed if a general user operates the MFP 101. The administrator makes a setting about take-over of the authentication information via the operation screen in Fig. 8.

If the administrator operates an operation key 801, the authentication information is not taken over. If the administrator operates an operation key 802, the authentication information is taken over. The take-over of the authentication information means that the authentication information input by the user for log-in to the MFP 101 is presented as authentication information for transmitting the file.

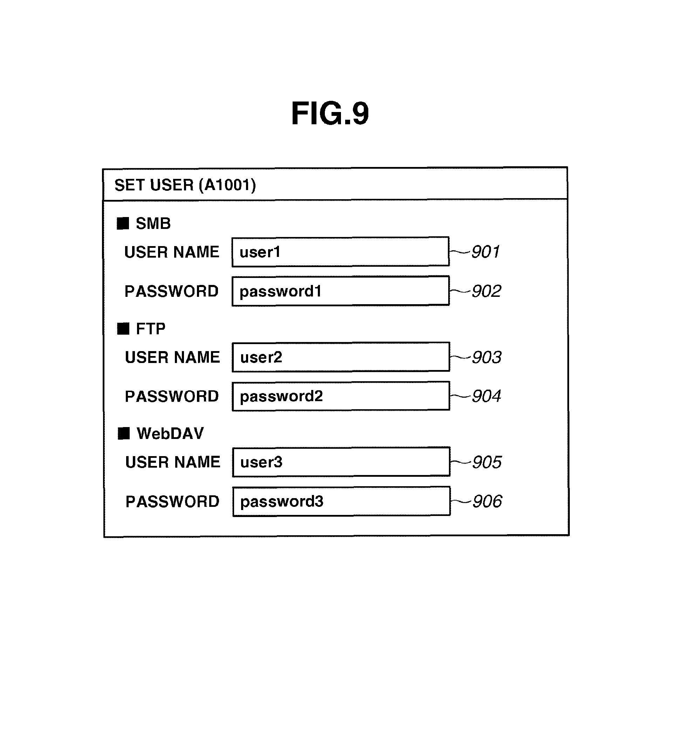

If the administrator operates an operation key 803, the authentication information is not taken over. In place of the take-over, authentication information (described later with reference to Fig. 9) registered in advance for each user is presented as the authentication information for transmitting the file.

Fig. 9 illustrates another example of the operation screen displayed on the operation unit 219. The operation screen in Fig. 9 is displayed when a general user operates the MFP 101. The user can register authentication information (user name and password) for transmitting the file by the SMB as information 901 and 902. Further, the user can register authentication information (user name and password) for transmitting the file by the FTP as information 903 and 904.

The user can further register authentication information (user name and password) for transmitting the file by the WebDAV as information 905 and 906. The authentication information as registered above is used when selecting "register for each user" in Fig. 8.

Fig. 9 illustrates an example of registering the information 901 to 906 as to one user administered by an identifier "A1001". However, the information 901 to 906 can be similarly registered as to other users.

Fig. 10 illustrates a flowchart of a log-in operation (a series of operations when the user starts to use the MFP 101) of the MFP 101. Operations (steps) in the flowchart in Fig. 10 are realized by the CPU 211 of the MFP 101executing a control program stored in the HDD 214.

In step S1001, an input of the authentication information (user name and password) are received from the user via the screen displayed on the operation unit 219.

In step S1002, the authentication information received in step S1001 is transmitted to the authentication server 102, and the user authentication is requested (it is inquired whether the user can use the MFP 101). In step S1003, it is determined whether contents notified from the authentication server 102 are authentication OK (authentication is successful). If it is determined that the contents are authentication OK (YES in step S1003), the use of the MFP 101 of the user is permitted, and the processing proceeds to step S1004.

If the contents are not authentication OK (NO in step S1003), the processing ends (or the processing returns to step S1001, and a screen for inputting the authentication information is displayed again). In step S1004, the authentication information received in step S1001 is stored in the RAM 213 or the HDD 214.

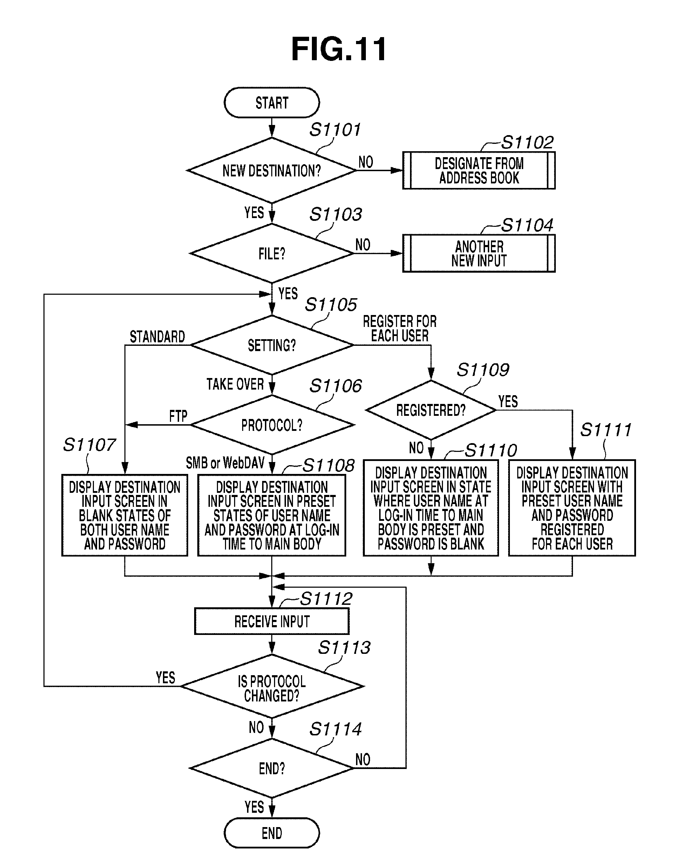

Fig. 11 illustrates a flowchart of an input operation of a new destination in the MFP 101. Operations (steps) in the flowchart in Fig. 11 are realized by the CPU 211 of the MFP 101executing a control program stored in the HDD 214. The flowchart in Fig. 11 starts when the operation screen in Fig. 4 is displayed.

In step S1101, it is determined whether the designated destination is a new destination. If the operation key 411 is operated on the operation screen in Fig. 4, it is determined that the designated destination is not the new destination (NO in step S1101), and the processing advances to step S1102. In step S1102, the contents of the address book stored in the HDD 214 are displayed. The user refers to the contents registered in the address book, and designates the contents as the image data.

If the operation key 412 is operated on the operation screen in Fig. 4, it is determined that the designated destination is the new destination (YES in step S1101), and the processing advances to step S1103. In step S1103, it is determined whether the new input destination is a file transmission destination.

If the operation keys 511 to 513 are operated on the operation screen in Fig. 5, it is determined that the new input destination is not the file transmission destination (NO in step S1103), and the processing advances to step S1104. In step S1104, an input of the destination information about email, fax, or Internet fax is received.

If the operation key 514 is operated on the operation screen in Fig. 5, it is determined that the new input destination is the file transmission destination (YES in step S1104), and the processing advances to step S1105. In step S1105, setting contents about the take-over of the authentication information are determined.

If the operation key 801 is operated on the operation screen in Fig. 8, the processing advances to step S1107. If the operation key 802 is operated on the operation screen in Fig. 8, the processing advances to step S1106. If an operation key 803 is operated on the operation screen in Fig. 8, the processing advances to step S1109.

In step S1107, the authentication information is not taken over. The information 604 and 605 is set to blank and the operation screen in Fig. 6 is displayed.

In step S1106, the transmission protocol indicated by the information 601 is determined. If the selected transmission protocol is the FTP, the processing advances to step S1107. If the selected transmission protocol is the SMB or WebDAV, the processing advances to step S1108. In step S1108, the authentication information is taken over. Specifically, the authentication information (authentication information stored in step S1004) received in step S1001 is read, and the operation screen in Fig. 6 is displayed while the read authentication information is preset as the information 604 and 605.

The SMB and WebDAV are transmission protocols for transmitting the file to the destination in the same domain. Therefore, it is highly possible that the destination of the image data is accessed with the same authentication information as the authentication information used for the log-in to the MFP 101. In step S1108, the authentication information input by the user for log-in to the MFP 101 is preset to the operation screen in Fig. 6, thereby the troublesome operation for inputting the same authentication information by the user a plurality of times can be omitted.

If the selected transmission protocol is the FTP, the image data can be transmitted to the destination in another domain. In this case, it is unlikely that the destination of the image data can be accessed with the same authentication information as the authentication information used for log-in to the MFP 101. If the selected transmission protocol is the FTP, the processing does not proceed to step S1108 but proceeds to step S1107. In step S1107, the operation screen in Fig. 6 is displayed while the information 604 and 605 is set to blank.

In step S1109, it is determined whether the authentication information is registered in association with the user who currently operates the MFP 101. Specifically, if the transmission protocol indicated by the information 601 is the SMB, it is determined whether the information 901 and 902 in Fig. 9 is registered.

Similarly, if it is determined that the transmission protocol indicated by the information 601 is the FTP in step S1109, it is determined whether the information 903 and 904 in Fig. 9 is registered. If it is determined that the transmission protocol in the information 601 is the WebDAV in step S1109, it is determined whether the information 905 and 906 in Fig. 9 is registered.

If the authentication information is registered (YES in step S1109), the processing advances to step S1111. The user name and password registered via the operation screen in Fig. 9 are preset to the information 604 and 605 and the operation screen in Fig. 6 is simultaneously displayed.

If the authentication information is not registered (NO in step S1109), the processing advances to step S1110. In step S1110, the user name is read from the authentication information (stored in step S1004) received in step S1001, and is preset to the information 604 and the operation screen in Fig. 6 is simultaneously displayed. In this case, the information 605 is set to blank. In this case, the information 604 may be set to blank.

As mentioned above, the operation is switched over. That is, it is determined whether the authentication information to preset the information 604 and 605 in Fig. 6 on the operation screen in Fig. 8 depending on contents selected in advance by the administrator. If it is determined that the authentication information is preset, the authentication information to be preset is determined. In particular, if the administrator operates the operation key 802 on the operation screen in Fig. 8, it is determined whether to take over the authentication information used for log-in to the MFP 101 depending on the selected transmission protocol and the switch-over is performed. As a consequence, it is possible to prevent occurring of an authentication error or prevent the leakage of authentication information due to the continuing use of improper authentication information can be prevented.

If the operation screen in Fig. 6 is displayed in steps S1107, S1108, S1110, and S1111, the information 602 and 603 is set to blank in all the steps. In step S1112, input from the user of the information 602 to 605 or change in the preset contents is received.

In step S1113, it is determined whether contents of the information 601 are changed on the operation screen in Fig. 6. The information 601 in Fig. 6 is in the drop-down format and enables selection of the transmission protocol. When the operation screen in Fig. 6 is first displayed via steps S1101 and S1103, the SMB is selected as a default. However, if the user changes the transmission protocol via the operation screen in Fig. 6, the processing returns to step S1105 and processing in step S1105 to S1112 is executed depending on the transmission protocol after the change.

If the transmission protocol is not changed, in step S1114, it is determined whether an input of the new destination ends. If the user instructs the end of the input, the processing ends (or, the designation of another destination is continuously received). If the user does not instruct the end of the input, the processing returns to step S1112.

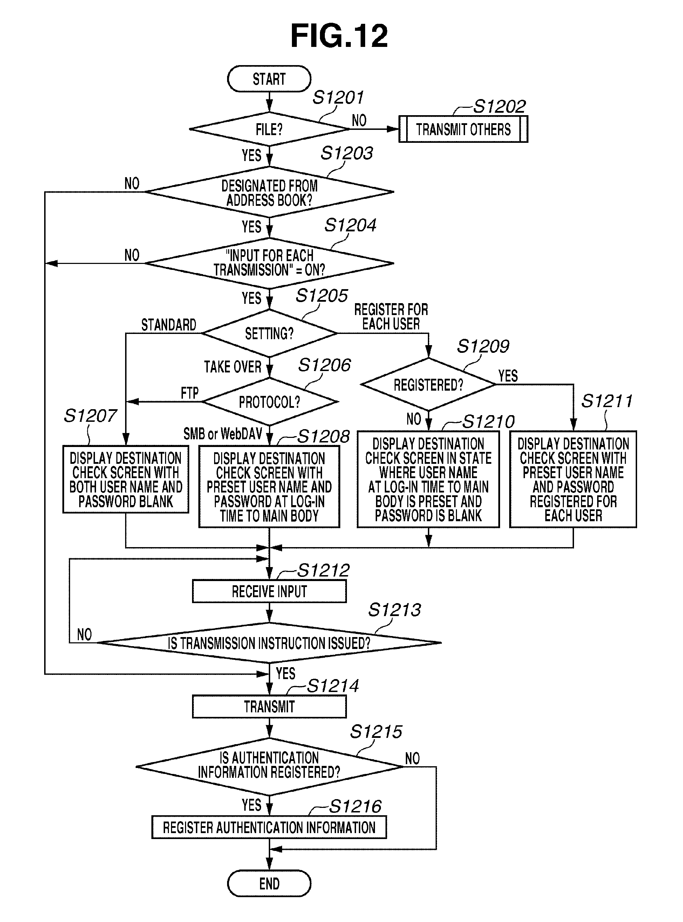

Fig. 12 illustrates a flowchart of a file transmission operation by the MFP 101. If a start key (not illustrated) is operated after designating the destination of the image data, the operation starts. Operations (steps) in the flowchart in Fig. 12 are realized by the CPU 211 of the MFP 101 executing a control program stored in the HDD 214.

In step S1201, it is determined whether the designated destination is a file transmission destination. If it is determined that the designated destination is not the file transmission destination (NO in step S1201), in step S1202, the image data is transmitted by e-mail, fax, or Internet fax. If it is determined that the designated destination is the file transmission destination (YES in step S1201), the processing advances to step S1203.

In step S1203, it is determined whether the destination was designated by using the address book or newly input. If it is determined that the destination was designated by using the address book, the processing advances to step S1204. If it is determined that the destination was newly input, the processing advances to step S1214.

In step S1204, it is determined whether the authentication information is to be checked by the user at each transmission (described as the information 706 in Fig. 7). If it is determined that the authentication information is to be checked by the user at each transmission (YES in step S1204), the processing advances to step S1205. if it is determined that the authentication information is not to be checked by the user at each transmission (NO in step S1204), the processing advances to step S1214.

In step S1205, contents of the setting about the take-over of the authentication information are determined. If the operation key 801 is operated on the operation screen in Fig. 8, the processing advances to step S1207. If the operation key 802 is operated on the operation screen in Fig. 8, the processing advances to step S1206. If the operation key 803 is operated on the operation screen in Fig. 8, the processing advances to step S1209.

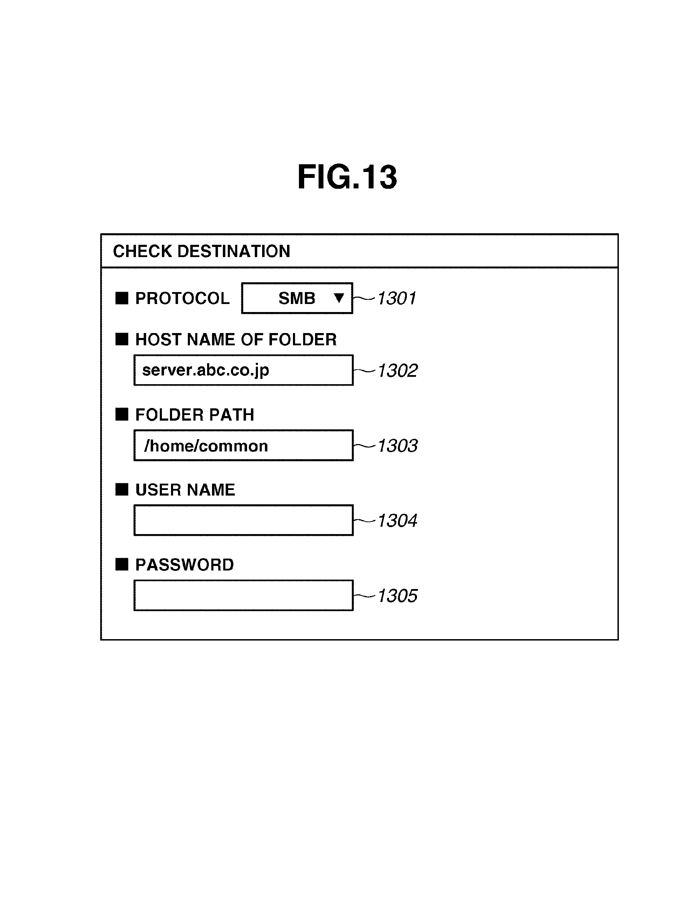

In step S1207, the operation screen in Fig. 13 is displayed. The operation screen in Fig. 13 is used for checking contents of the authentication information by the user at the transmission time. In step S1207, the information registered in the address book as the information 704 and 705 is deleted, and information 1304 and 1305 in Fig. 13 is displayed in a blank state. In this case, the user needs to input the information 1304 and 1305.

In step S1206, the transmission protocol indicated by the information 701 is determined. If it is determined in step S1206 that the selected transmission protocol is the FTP, the processing advances to step S1207. If it is determined in step S1206 that the transmission protocol is the SMB or WebDAV, the processing advances to step S1208.

In step S1208, the authentication information is taken over. Specifically, the information registered in the address book as the information 704 and 705 is deleted, the authentication information (stored in step S1004) received in step S1001 is read, preset to the information 1304 and 1305, and the operation screen in Fig. 13 is displayed.

Since the SMB and WebDAV are transmission protocols for transmitting the file to the destination in the same domain, it is highly possible that the destination of the image data is accessed with the same authentication information as the authentication information used for log-in to the MFP 101. In step S1208, since the authentication information input by the user is preset to the operation screen in Fig. 13 for log-in to the MFP 101, it is possible to omit the troublesome operation to input the same authentication information many times by the user.

If it is determined in step S1206 that the selected transmission protocol is the FTP, the image data can be transmitted to the destination in another domain. In this case, it is highly possible that the destination of the image data is accessed with the same authentication information as the authentication information used for log-in to the MFP 101. If it is determined that in step S1206 the transmission protocol is the FTP, the processing does not proceed to step S1208 but proceeds to step S1207. In step S1207, the operation screen in Fig. 13 is displayed while the information 1304 and 1305 is set to blank.

In step S1209, it is determined whether the authentication information is registered in association with the user who currently operates the MFP 101. Specifically, if the transmission protocol indicated by the information 701 is the SMB in step S1206, it is determined whether the information 901 and 902 in Fig. 9 is registered.

Similarly, if the transmission protocol indicated by the information 701 is the FTP in step S1206, it is determined whether the information 903 and 904 indicated by Fig. 9 is registered. If the transmission protocol indicated by the information 701 is the WebDAV is the FTP in step S1206, it is determined whether the information 905 and 906 in Fig. 9 is registered.

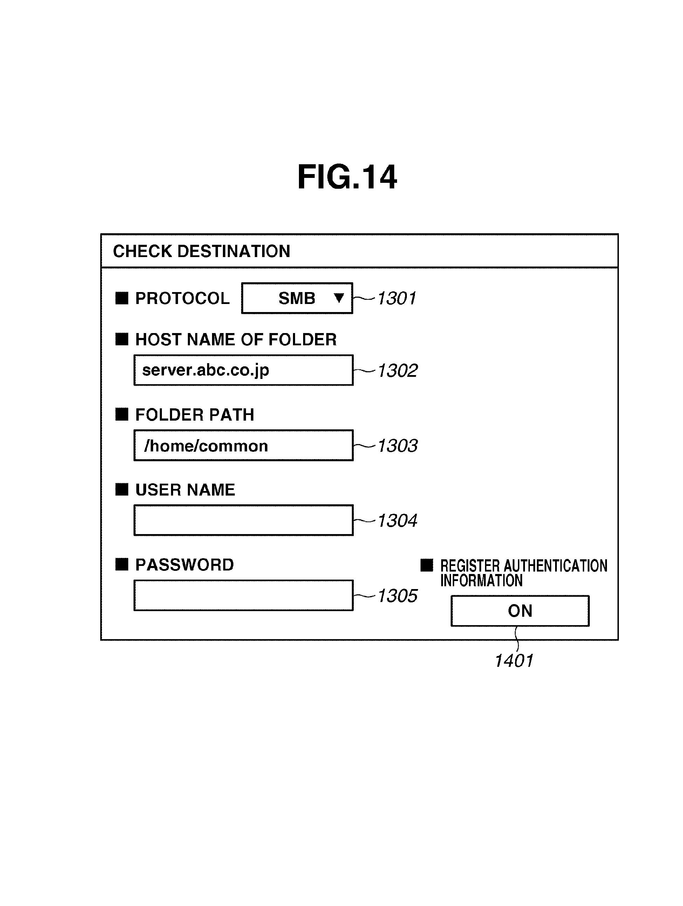

If the authentication information is registered (YES in step S1209), the processing advances to step S1211. In step S1211, an operation screen in Fig. 14 is displayed. The operation screen in Fig. 14 is used for checking contents of the authentication information by the user at the transmission time, similarly to the screen in Fig. 13. Unlike the operation screen in Fig. 13, an input field of information 1401 is added to give an instruction indicating whether the authentication information is registered.

If "register the authentication information" is turned ON, the user checks the information 1304 and 1305 (inputs or changes the information if necessary) via the operation screen in Fig. 14. Then, the finally determined authentication information is registered as the authentication information input via the screen in Fig. 9 in association with the user. If "register the authentication information" is turned OFF, the registration is not performed.

In step S1211, the information registered in the address book as the information 704 and 705 is deleted. The user name and password registered via the operation screen in Fig. 9 are preset to the information 1304 and 1305, and the operation screen in Fig. 14 is simultaneously displayed.

If the authentication information is not registered (NO in step S1209), the processing advances to step S1210. In step S1210, the information registered as the information 704 and 705 is deleted. The user name is preset to the information 1304 from the authentication information (stored in step S1004) received in step S1001 and the operation screen in Fig. 14 is displayed. At this time, the information 1305 is set to blank. The information 1304 may also be set to blank.

The switch-over is performed corresponding to the contents selected in advance by the administrator on the operation screen in Fig. 8 to preset or not to preset the authentication information to the information 1304 and 1305 in Fig. 13 or 14. If the authentication information is preset, it is determined what is to be preset. In particular, if the administrator operates the operation key 802 on the operation screen in Fig. 8 corresponding to the selected transmission protocol, the switch-over is performed to take over or not to take over the authentication information used for log-in to the MFP 101. As a consequence, it is possible to prevent occurring of an authentication error or leakage of the authentication information due to the continuous use of improper authentication information.

In steps S1207, S1208, S1210, and S1211, if the operation screen in Fig. 13 or 14 is displayed, the information registered in the address book as the information 701, 702, and 703 is preset to the information 1301, 1302, and 1303. In step S1212, input of the information 1304 and 1305 from the user or change of preset contents is received. In step S1213, it is determined whether a transmission instruction is issued from the user. If it is determined that the transmission instruction is issued from the user (YES in step S1213), the processing advances to step S1214. If it is determined that the transmission instruction is not issued from the user (NO in step S1213), the processing returns to step S1212.

In step S1214, the image data is transmitted by the transmission protocol corresponding to the set destination. Specifically, a connection to the file server indicated by the information 1302 in Fig. 13 or 14 is made to identify a folder serving as the storage destination of the image data by using the path indicated in the information 1303 in Fig. 13 or 14.

The file server is logged in (the folder is accessed) using the authentication information set as the information 1304 and 1305 in Fig. 13 or 14, and the image data is transmitted to the file server (stored to the folder). If determined as NO in step S1204 and the processing then advances to step S1214, the authentication information set as the information 704 and 705 in Fig. 7 is used for log-in to the file server (access to the folder).

In step S1215, it is determined whether it is instructed to register the authentication information set as the information 1304 and 1305 in Fig. 14 as the authentication information input via the operation screen in Fig. 9.

If "register the authentication information" is ON with the information 1401, it is determined that the instruction of the registration is issued (YES in step S1215) and the processing advances to step S1216. In step S1216, the authentication information set as the information 1304 and 1305 in Fig. 14 is registered as the authentication information input via the screen in Fig. 9, in association with the user. If the information 1401 indicates "register the authentication information" is OFF, it is determined that the instruction indicating the registration is not issued (NO in step S1215), step S1216 is skipped, and the processing ends.

The registration in step S1216 is performed if the transmission in step S1214 is successful. If the transmission in step S1214 is not successful, the registration in step S1216 may not be performed. In steps S1207 and S1208, the operation screen in Fig. 13 is displayed without an input field of the information 1401. Therefore, the instruction about "register the authentication information" is not issued (NO in step S1215). If the processing is performed via step S1207 or S1208, steps S1215 and S1216 are skipped, and the processing ends.

A second exemplary embodiment of the present invention is described. The SMB and the WebDAV are transmission protocols which takes account of the domain, and are used for transmitting the file to the destination in the same domain. Therefore, if the image data is going to be transmitted to the destination in another domain via the SMB or WebDAV, it is highly possible that a transmission error occurs. If only the transmission error occurs, the user may perform a re-transmission operation. However, if the authentication information is "taken over" according to the first exemplary embodiment, the authentication information used for log-in to the MFP 101 can be externally leaked.

Therefore, according to the present exemplary embodiment, even if the selected transmission protocol is the SMB or WebDAV, when the designated destination is not in the same domain, the authentication information is not taken over.

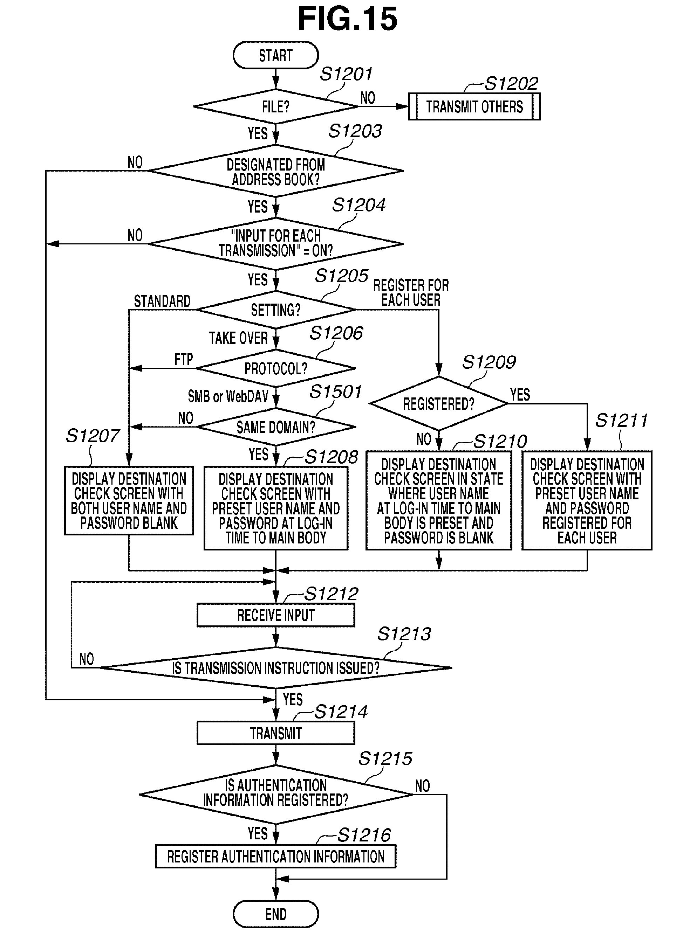

Fig. 15 illustrates a flowchart of a file transmission operation of the MFP 101. The flowchart in Fig. 15 corresponds to the flowchart in Fig. 12. Operations (steps) in the flowchart in Fig. 15 are realized by the CPU 211 of the MFP 101 executing a control program stored in the HDD 214++. Steps S1201 to S1216 are similar to those according to the first exemplary embodiment.

In step S1501, it is determined whether an apparatus at the destination indicated by the information 702 is in the same domain as the MFP 101. In the example in Fig. 1, the file server 103 is in the same domain as the MFP 101. However, the file server 104 is not in the same domain.

If it is determined that the apparatus at the destination indicated by the information 702 is in the same domain as the MFP 101 (YES in step S1501), the processing advances to step S1208. In step S1208, the authentication information (stored in step S1004) received in step S1001 is read, is preset to the information 1304 and 1305, and the operation screen in Fig. 13 is displayed.

If it is determined that the apparatus at the destination indicated by the information 702 is not in the same domain as the MFP 101 (NO in step S1501), the processing advances to step S1207. In step S1207, the authentication information is not taken over , and the operation screen in Fig. 13 is displayed with the information 1304 and 1305 blank.

Thus, according to the second exemplary embodiment, even if the selected transmission protocol is the SMB or WebDAV (in step S1206), when the apparatus at the destination is not in the same domain (NO in step S1501), the authentication information is not taken over. As a consequence, when the file is transmitted out of the domain using the SMB or WebDAV, it is possible to prevent the leakage of the authentication information.

According to the first and second exemplary embodiments, the image data transmitted in step S1214 is generated by reading the document by the scanner 221 in step S1214. However, the image data may be generated according to another exemplary embodiment. For example, the document may be read by using another user operation as trigger before operating the start key.

The image data generated by the scanner 221 is transmitted, in the above description. However, the present invention can be applied to the transmission of the image data input by another method (e.g., fax reception from outside).

In step S1001, the MFP 101 receives an input of the authentication information from the user. In step S1002, the authentication server 102 authenticates the user based on the authentication information received by the MFP 101. If the authentication of the user is OK (successful) (in step S1003), the MFP 101 permits use of the MFP 101.

The MFP 101 designates the destination to which the image data is transmitted as a file (Fig. 4). In steps S1108 and S1208, the MFP 101 presents to the user the authentication information received in step S1001 which is used when the image data is transmitted as a file. In steps S1106 and S1206, the MFP 101 determines the transmission protocol corresponding to the designated destination. If the MFP 101 determines that the transmission protocol corresponding to the designated destination is a first transmission protocol (SMB or WebDAV), in steps S1108 and S1208, the authentication information is presented.

If the transmission protocol corresponding to the designated destination is a second transmission protocol (FTP) in step S1106 or S1206, in steps S1107 and S1207, the MFP 101 does not present the authentication information.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment (s) of the present invention, and by a method performed by the computer of the system or apparatus by, for example, reading out and executing the computer executable instructions from the storage medium to perform the functions of one or more of the above-described embodiment (s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Thus, switch-over is performed whether to take over or not take over the authentication information, depending on the transmission protocol when the file is transmitted, thereby improving the convenience of the user as well as preventing the leakage of the authentication information.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An image processing system including an image processing apparatus (101), the image processing system comprising:
reception means configured to receive an input of authentication information from a user;
permission means configured to permit use of the image processing apparatus (101) when an authentication of a user is successful based on the authentication information received by the reception means;
designation means configured to designate a destination for transmitting image data as a file;
determination means configured to determine a transmission protocol corresponding to the destination designated by the designation means; and
control means (310) configured to control to use the authentication information received by the reception means as authentication information for transmitting the image data when it is determined that the transmission protocol corresponding to the destination designated by the designation means is a first transmission protocol, and not to use the authentication information received by the reception means as authentication information for transmitting the image data when it is determined that the transmission protocol corresponding to the destination designated by the designation means is not the first transmission protocol.

2. The image processing system according to claim 1, further comprising presentation means configured to present to the user the authentication information received by the reception means as the authentication information which is used when the image data is transmitted as the file,
wherein the control means controls the presentation means to make the presentation when it is determined that the transmission protocol corresponding to the destination designated by the designation means is the first transmission protocol, and controls the presentation means not to make the presentation when the transmission protocol corresponding to the destination designated by the designation means is not the first transmission protocol.

3. The image processing system according to claim 1 or 2, wherein the first transmission protocol is a transmission protocol for transmitting a file to a destination in the same domain, and a second transmission protocol other than the first transmission protocol is a transmission protocol for transmitting a file to the destination in the same domain or a destination in another domain.

4. The image processing system according to claim 3,
wherein the first transmission protocol is an SMB or a WebDAV, and the second transmission protocol is an FTP.

5. The image processing system according to claim 2,
wherein the presentation means makes the presentation when the designation means designates the destination of the image data.

6. The image processing system according to claim 5,
wherein, when the presentation means does not make the presentation, a screen is displayed with an input field of the authentication information blank when the designation means designates the destination of the image data.

7. The image processing system according to claim 2,
wherein the presentation means makes the presentation when the user checks the destination designated by the designation means.

8. The image processing system according to claim 7, wherein, if the presentation means does not makes the presentation, a screen is displayed with an input field of the authentication information blank when the user checks the destination designated by the designation means.

9. The image processing system according to any one of claims 1 to 8, comprising:
authentication means (102) configured to authenticate the user based on the authentication information received by the reception means.

10. A control method of image processing system including an image processing apparatus (101), the control method comprising:
receiving an input of authentication information from a user;
permitting use of the image processing apparatus (101) when the authentication of the user is successful based on the received authentication information;
designating a destination for transmitting image data as a file;
determining a transmission protocol corresponding to the designated destination; and
controlling to use the received authentication information as authentication information for transmitting the image data when it is determined that the transmission protocol corresponding to the designated destination is a first transmission protocol, and not to use the received authentication information as authentication information for transmitting the image data when it is determined that the transmission protocol corresponding to the designated destination is not the first transmission protocol.

11. The control method according to claim 10, wherein, in the controlling, presenting to the user the received authentication information as the authentication information which is used when the image data is transmitted as the file when it is determined that the transmission protocol corresponding to the designated destination is the first transmission protocol, but not presenting to the user the received authentication information as the authentication information which is used when the image data is transmitted as the file when it is determined that the transmission protocol corresponding to the designated destination is not the first transmission protocol.

12. The control method according to claim 10 or 11, wherein the first transmission protocol is a transmission protocol for transmitting a file to a destination in the same domain, and a second transmission protocol other than the first transmission protocol is a transmission protocol for transmitting a file to the destination in the same domain or a destination in another domain.

13. The image processing system according to claim 12, wherein the first transmission protocol is an SMB or a WebDAV, and the second transmission protocol is an FTP.

14. A program for causing an image processing system to execute the control method according to any one of claim 10 to 13.
